(19) Europäisches Patentamt
European Patent Office
Office européen des brevets

(11) EP 1 555 657 A1

(12) EUROPEAN PATENT APPLICATION
published in accordance with Art. 158(3) EPC

(43) Date of publication:
**20.07.2005 Bulletin 2005/29**

(21) Application number: **03769917.0**

(22) Date of filing: **23.10.2003**

(51) Int Cl.[7]: **G11B 5/73**, G11B 5/733, C08J 5/18, C08L 67/00, B32B 27/36, B29C 55/12, B29C 55/14, B29C 55/16

(86) International application number:
**PCT/JP2003/013568**

(87) International publication number:
**WO 2004/038703 (06.05.2004 Gazette 2004/19)**

(84) Designated Contracting States:
**AT BE BG CH CY CZ DE DK EE ES FI FR GB GR HU IE IT LI LU MC NL PT RO SE SI SK TR**

(30) Priority: **24.10.2002 JP 2002309392**

(71) Applicant: **Teijin Dupont Films Japan Limited**
**Tokyo 100-0011 (JP)**

(72) Inventors:
- **KOBAYASHI, I.**
  **Teijin DuPont Films Japan Limited**
  **Anpachi-gun, Giffu 503-0123 (JP)**
- **MURO, Shinji Teijin DuPont Films Japan Limited**
  **Anpachi-gun, Gifu 503-0123 (JP)**

(74) Representative: **Carpmaels & Ransford**
**43 Bloomsbury Square**
**London WC1A 2RA (GB)**

# (54) BIAXIALLY ORIENTED POLYESTER FILM AND FLEXIBLE DISK

(57) A biaxially oriented polyester film, comprising a polyester containing inert particles, wherein

(A) the smallest value of Young's modulus in the planar direction is 5 GPa or more, and the difference between the largest value and the smallest value is 1 GPa or less;
(B) the largest value of thermal shrinkage factor when the film is heated at 105° C for 30 minutes is 0.6 % or less, and the difference between the largest value and the smallest value is 0.3 % or less;
(C) the center line average surface roughnesses (Ra) of the both surfaces of the film are in the range of 2 to 10 nm; and
(D) the agglomeration ratio of the inert particles in the film is 30 % or less.

This film has a flat surface, few large projections formed by the agglomeration of particles, high strength, a small thermal shrinkage factor, rarely experienced an error (D/O), and had excellent head contact and dimensional stability as a base film for flexible disks, particularly high-density magnetic disks.



Printed by Jouve, 75001 PARIS (FR)

## Description

### Field of the Invention

The present invention relates to a biaxially oriented polyester film and a flexible disk. More specifically, it relates to a biaxially oriented polyester film which rarely experiences an error such as a drop-out (D/O) and a dimensional change during and after processing and is useful for flexible disks such as floppy disks having excellent electromagnetic conversion characteristics, particularly high-density magnetic disks and to a flexible disk comprising the same as a base film.

### Description of the Prior Art

A biaxially oriented polyester film typified by a biaxially oriented polyethylene terephthalate film and polyethylene naphthalate film is widely used as a base film for a magnetic recording medium due to its excellent physical and chemical properties.

Flexible disk drives and flexible disks as memory devices are becoming popular along with the spread of personal computers, and larger-capacity and higher-density flexible disks are now in demand as the volume of data such as image data is growing.

Accordingly, it is desired that the base film to be used should have a more flat surface and particles to be added to the film should be smaller in size and quantity. To meet these requirements, JP-A 2000-289105 (the term "JP-A" as used herein means an "unexamined published Japanese patent application") proposes a polyester film whose surface roughness is adjusted to a specific range by reducing the size of particles to be mixed with a polyester.

However, as the particles become smaller in size, the agglomeration of the particles occurs more easily, thereby forming agglomerated projections which cause an error (D/O). A higher-strength film is desired from the viewpoint of the contact with a head of the film, that is, the contact with a magnetic head of the magnetic surface of a tape, and a film having a smaller thermal shrinkage factor is desired from the viewpoint of dimensional stability.

### Summary of the Invention

It is an object of the present invention to provide a biaxially oriented polyester film which has a flat surface, a small number of large projections formed by the agglomeration of inert particles, high density and small thermal shrinkage factor, rarely experiences an error (D/O) and is excellent in contact with a head and dimensional stability as a base film for flexible disks, particularly high-density magnetic disks.

It is another object of the present invention to provide a flexible disk which comprises the biaxially oriented polyester film of the present invention as a base film and exhibits the above excellent characteristic properties.

Other objects and advantages of the present invention will become apparent from the following description.

According to the present invention, firstly, the above objects and advantages of the present invention are attained by a biaxially oriented polyester film for flexible disks, comprising a polyester containing inert particles, wherein

(A) the smallest value of Young's modulus in the planar direction is 5 GPa or more, and the difference between the largest value and the smallest value of Young's modulus in the planar direction is 1 GPa or less;

(B) the largest value of heat shrinkage factor when the film is heated at 105° C for 30 minutes is 0.6 % or less, and the difference between the largest value and the smallest value of heat shrinkage factor when the film is heated at 105°C for 30 minutes is 0.3 % or less;

(C) the center line average surface roughnesses (Ra) of the both surfaces of the film are in the range of 2 to 10 nm; and

(D) the agglomeration ratio of the inert particles in the film is 30 % or less.

According to the present invention, secondly, the above objects and advantages of the present invention are attained by a laminated biaxially oriented polyester film for flexible disks, comprising the above biaxially oriented polyester film of the present invention and an adhesive layer which comprises colloidal particles having an average particle diameter of 10 to 200 nm and a water-dispersible polyester resin having a sulfonate group and is laminated on both sides of the film.

According to the present invention, thirdly, the above objects and advantages of the present invention are attained by a flexible disk comprising the above biaxially oriented polyester film or the above laminated biaxially oriented polyester film of the present invention and a magnetic layer laminated on both sides of the film.

Brief Description of the Drawing

Fig. 1 is a diagram for explaining the calculation of the agglomeration ratio in the present invention.

Detailed Description of the Preferred Embodiment

The present invention will be described in detail hereinunder.

Polyester

The polyester in the present invention is a film forming linear polyester essentially composed of an ester unit of an aromatic dicarboxylic acid component and a glycol component.
The main acid component of the polyester of the present invention is preferably terephthalic acid or naphthalene-2,6-dicarboxylic acid, and the glycol component thereof is preferably ethylene glycol.
The term "polyester" as used in the present invention comprehends, for example, polyethylene terephthalate, polyethylene-2,6-naphthalate, and polyesters and polyester compositions which do not lose the properties of these polyesters substantially. The polyester include, for example, polyethylene terephthalate homopolymers, copolymers and mixtures with other polymer thereof comprising 50 wt% or more, specifically 70 wt% or more of ethylene terephthalate unit and mixtures with other polymer thereof, polyethylene-2,6-naphthalate homopolymers, and copolymers comprising 50 wt% or more, specifically 70 wt% or more of an ethylene-2,6-naphthalate unit and mixtures with other polymer thereof are included. Out of these, ethylene-2,6-naphthalate-based polyesters are particularly preferred.
Examples of the comonomer include aromatic dicarboxylic acids such as terephthalic acid (when naphthalene-2,6-dicarboxylic acid is the main component), naphthalene-2,6-dicarboxylic acid (when terephthalic acid is the main component), naphthalene-2,7-dicarboxylic acid, naphthalene-1,5-dicarboxylic acid, phthalic acid, isophthalic acid, diphenylsulfonedicarboxylic acid, benzophenonedicarboxylic acid, 4,4'-diphenyldicarboxylic acid and diphenylether dicarboxylic acid; aliphatic dicarboxylic acids such as succinic acid, oxalic acid, adipic acid, sebacic acid and dodecanedicarboxylic acid; alicyclic dicarboxylic acids such as hexahydroterephthalic acid and 1,3-adamantanedicarboxylic acid; oxycarboxylic acids such as p-oxybenzoic acid and p-oxyethoxybenzoic acid; and glycols such as diethylene glycol, trimethylene glycol, tetramethylene glycol, hexamethylene glycol, neopentyl glycol and 1,4-cyclohexanedimethanol.
The polyester in the present invention may be obtained by capping some or all of the terminal hydroxyl groups and/or carboxyl groups by a monofunctional compound such as benzoic acid or methoxypolyalkylene glycol or by copolymerizing an extremely small amount (limits that a linear polymer is substantially obtained) of a polyfunctional compound component having a functionality of 3 or more such as glycerin, pentaerythritol, trimellitic acid or pyromellitic acid.
In the present invention, the catalyst used for the polymerization of the polyester is preferably a titanium compound. The titanium compound is preferably a titanium compound soluble in a polyester (polyester-soluble titanium compound) to reduce the amount of foreign matter derived from the catalyst and improve transparency. A titanium compound which is commonly used as a polycondensation catalyst for a polyester may be used as the titanium compound.
The titanium compound particularly preferably used in the present invention is a compound represented by the following formula (I), a product of a reaction between the compound represented by the following formula (I) and an aromatic polycarboxylic acid represented by the following formula (II) or an anhydride thereof, or titanium acetate.

$$Ti(OR^1)(OR^2)(OR^3)(OR^4) \qquad (I)$$

(wherein $R^1$, $R^2$, $R^3$ and $R^4$ are each independently an alkyl group or phenyl group.)

$$C_6H_{6-n}(COOH)_n \qquad (II)$$

(wherein n is an integer of 2 to 4.)
Preferred examples of the titanium compound represented by the above formula (I) include tetraisopropoxytitanium, tetrapropoxytitanium, tetra-n-butoxytitanium, tetraethoxytitanium and tetraphenoxytitanium. Preferred examples of the aromatic polycarboxylic acid represented by the above formula (II) or anhydride thereof include phthalic acid, trimellitic acid, hemimellitic acid, pyromellitic acid and anhydrides thereof. The reaction between the above titanium compound and the aromatic polycarboxylic acid or anhydride thereof can be carried out by dissolving part of the aromatic polycarboxylic acid or anhydride thereof in a solvent and adding the titanium compound dropwise to the resulting solution at 0 to 200°C for 30 minutes or more.

The polyester in the present invention preferably contains a polyester-soluble titanium compound in an amount of 2 to 10 mmol% in terms of the titanium metal element. The amount is particularly preferably 3 to 10 mmol%. When the amount of the titanium metal element contained in the polyester is smaller than 2 mmol%, the productivity of the polyester lowers and a polyester having a target molecular weight may not be obtained. When the amount of the titanium metal element is larger than 10 mmol%, the heat stability lowers and a reduction in molecular weight at the time of film formation becomes large, thereby making it difficult to obtain a target polyester. The polyester-soluble titanium compound represents the total of a titanium compound used as an ester interchange reaction catalyst and a titanium compound used as a polycondensation reaction catalyst when a first stage reaction is an ester interchange reaction.

The polyester in the present invention is manufactured by using a titanium compound as a catalyst and a phosphorus compound as a stabilizer and preferably satisfies one or both of the following formulas (1) and (2):

$$0.5 \leqq P/Ti \leqq 10 \quad (1)$$

wherein P is a value (mmol%) obtained by dividing the number of mols of elemental phosphorus of the phosphonate compound by the total number of mols of all the recurring units of the polyester, and Ti is a value (mmol%) obtained by dividing the number of mols of elemental titanium of the titanium compound by the total number of mols of all the recurring unit of the polyester,

$$5 \leqq P + Ti \leqq 100 \quad (2)$$

wherein P and Ti are as defined in the above formula (1).

More preferably, (P/Ti) in the above formula (1) is in the range of 4 to 10, and (Ti + P) in the above formula (2) is in the range of 20 to 70.

When (P/Ti) is smaller than 0.5, the obtained film becomes markedly yellowish and deteriorates by heat disadvantageously. When (P/Ti) is larger than 10, the polymerization reactivity of the polyester greatly lowers, thereby making it difficult to obtain a target polyester. In the polyester of the present invention, the suitable range of (P/Ti) is narrower than that of an ordinary metal catalyst. When it is within an appropriate range, the effect of the present invention which cannot be obtained in the prior art can be obtained. When (Ti + P) is smaller than 5, the productivity of a film forming process making use of an electrostatic application method greatly lowers, and moldability and impact resistance are degraded by a reduction in the thickness uniformity of the film, whereby satisfactory performance may not be obtained. When (Ti + P) is larger than 100, a small amount of foreign matter derived from the catalyst is produced, thereby deteriorating the transparency of the polymer with the result that satisfactory performance may not be obtained.

The polyester in the present invention preferably contains substantially no metal element derived from a catalyst other than the titanium metal element. This means that a metal compound derived a catalyst other than a titanium compound is not used as a polycondensation catalyst and therefore, the obtained polyester contains no metal element of a metal compound derived from a catalyst other than the above titanium.

From the view points mentioned above, the content of the metal element of a metal compound derived from a catalyst other than the titanium compound in the polyester is not more than 2 mmol%, preferably not more than 1 mmol%, more preferably not more than 0.5 mmol%, particularly preferably 0 mmol% based on the total number of mols of all the recurring units of the polyester.

Examples of the phosphorus compound used in the present invention include phosphoric acid, phosphorous acid, phosphonic acid, phosphonate compound and derivatives thereof. They may be used alone or in combination of two or more. Out of these phosphorus compounds, phosphonate compounds represented by the following formula (III) are preferred.

$$R^5O\text{-}C(O)\text{-}X\text{-}P(O)\text{-}(OR^6)_2 \quad (III)$$

(wherein $R^5$ and $R^6$ are the same or different and each an alkyl group having 1 to 4 carbon atoms, and X is $-CH_2-$ or $-CH(C_6H_5)$.)

Specific examples of the phosphonate compound include dimethy-, diethyl-, dipropyl- and dibutyl-esters of the following phosphonic acid.

Examples of the phosphonic acid compound include
carbomethoxymethanephosphonic acid,
carboethoxymethanephosphonic acid,
carbopropoxymethanephosphonic acid,
carbobutoxymethanephosphonic acid,
carbomethoxy-phosphono-phenylacetic acid,
carboethoxy-phosphono-phenylacetic acid,
carbopropoxy-phosphono-phenylacetic acid and
carbobutoxy-phosphono-phenylacetic acid.

The reason why the above phosphonate compound is preferred is that the catalytic activity of a titanium compound is maintained for a long time during a polycondensation reaction because a reaction between the phosphonate compound and the titanium compound proceeds more slowly than a reaction between a phosphorus compound which is generally used as a stabilizer and the titanium compound with the result that the amount of the titanium compound to be added to the polyester can be made small. Further, the phosphonate compound has the property of rarely impairing the thermal stability of the polyester even when a large amount of a stabilizer is added to the catalyst as in the present invention.

The phosphorus compound may be added at any time after an ester interchange reaction or esterification reaction substantially ends. For instance, it may be added at atmospheric pressure before the start of a polycondensation reaction, at a reduced pressure after the start of the polycondensation reaction, in the last stage of the polycondensation reaction, or after the end of the polycondensation reaction, that is, after the polymer is obtained.

In general, there are known two processes: one in which an aromatic dicarboxylic acid typified by terephthalic acid is used as a raw material of a polyester comprising ethylene terephthalate as the main recurring unit and the other in which an ester forming derivative of an aromatic dicarboxylic acid typified by dimethyl terephthalate is used as a raw material. In the polyester production process of the present invention, an ester interchange reaction is carried out by using dimethyl terephthalate as a raw material in an amount of 80 mol% or more based on the total of all the dicarboxylic acid components. This process in which dimethyl terephthalate is used as a raw material has an advantage that the phosphorus compound added as a stabilizer during a polycondensation reaction is rarely scattered as compared with the former process in which terephthalic acid is used as a raw material.

In the process in which dimethyl terephthalate is used as a raw material, it is preferred to add part and/or all of the titanium compound before the start of an ester interchange reaction and use a catalyst which serves as an ester interchange reaction catalyst and polycondensation reaction catalyst, and it is more preferred to carry out the ester interchange reaction at a pressure of 0.05 to 0.20 MPa because the amount of the titanium compound to be added can be reduced.

When the pressure during the ester interchange reaction is lower than 0.05 MPa, the reaction is not fully promoted by the catalytic function of the titanium compound and when the pressure is higher than 0.20 MPa, the content of by-produced diethylene glycol in the polymer greatly increases, thereby deteriorating the characteristic properties such as heat stability of the polymer.

The intrinsic viscosity measured in o-chlorophenol at 35° C of the polyester in the present invention is in the range of 0.40 to 0.90, preferably 0.50 to 0.85. When the intrinsic viscosity falls below the above range, stable film formation cannot be performed and when the intrinsic viscosity exceeds the above range, a molten polymer is hardly extruded.

Biaxially oriented polyester film

The biaxially oriented polyester film of the present invention must have an agglomeration ratio of inert particles contained in the film of 30 % or less. This agglomeration ratio is preferably 20 % or less, more preferably 15 % or less. When the agglomeration ratio of inert particles contained in the film is larger than 30 %, an error (D/O) occurs due to a projection formed by agglomeration, or the film is chipped from a projection formed by agglomeration as a starting point during processes of preparing a film or flexible disk and an error (D/O) often occurs due to chips, thereby making it impossible to increase the density.

To control the agglomeration ratio of inert particles contained in the film to 30 % or less, for example, inert particles having an average particle diameter of 0.01 to 0.5 µm are used, a titanium compound soluble in a polyester which constitutes the film is contained in an amount of 2 to 10 mmol% in terms of the titanium metal element, and further a thermoplastic polyester which contains substantially no metal element derived from a catalyst other than the titanium compound contained in the polyester is used.

The agglomeration ratio of the inert particles contained in the film is obtained by plasma etching the surface

of the film and observing the surface through a scanning microscope at a magnification of X30,000 in accordance with the method which will be described hereinafter.

The both surfaces of the biaxially oriented polyester film of the present invention have a center line average surface roughness (Ra) in the longitudinal direction of 2 to 10 nm, preferably 3 to 10 nm. When this surface roughness (Ra) is lower than 2 nm, the film is easily scratched at the time of production and when the surface roughness is higher than 10 nm, the recording output lowers disadvantageously. When an adhesive layer is formed on the surface of the film, the center line average surface roughness (Ra) is a value obtained by measuring the surface of the adhesive layer.

The smallest value of Young's modulus in the planar direction of the biaxially oriented polyester film of the present invention must be 5 GPa or more, and the difference between the largest value and the smallest value of Young's modulus in the planar direction must be 1 GPa or less.

The above Young's modulus is preferably 6 GPa or more. When this Young's modulus is lower than 5 GPa, the stiffness of the obtained flexible disk deteriorates and the output of the disk lowers, thereby causing an error. The difference between the largest value and the smallest value of Young's modulus is preferably 0.7 GPa or less, more preferably 0.5 GPa or less. When the difference between the largest value and the smallest value are larger than 1 GPa, contact between the head and the flexible disk, that is, contact between the magnetic head and the magnetic surface of the tape in the circumferential direction varies, thereby causing an output change with the result of the occurrence of an error.

The biaxially oriented polyester film of the present invention must have a thermal shrinkage factor at 105° C of 0.6 % or less, preferably 0.3 % or less, more preferably 0.2 % or less.

When the heat shrinkage factor is larger than 0.6 %, the thermal shrinkage factor of the flexible disk after a magnetic layer is formed becomes large as well, thereby causing such troubles as the deterioration of flatness, track deviation, an output change, output reduction and error (D/O).

The difference between the largest value and smallest value of the above heat shrinkage factor must be 0.3 % or less, preferably 0.2 % or less, more preferably 0.1 % or less. When the difference between the largest value and the smallest value of heat shrinkage factor is larger than 0.3 %, a trouble such as track deviation occurs.

Since the biaxially oriented polyester film of the present invention is used in a flexible disk, particularly a high-density magnetic recording flexible disk, the thickness of the film is preferably 20 to 80 µm, more preferably 25 to 70 µm, particularly preferably 25 to 60 µm. When the thickness of the film is smaller than 20 µm, the stiffness of the obtained disk becomes extremely low and the requirements for a high-density recording system are hardly satisfied and when the thickness is larger than 80 µm, the flexibility of the film becomes unsatisfactory for recording and reproduction by the magnetic head.

## Inert particles

In the present invention, inert particles are contained in the biaxially oriented polyester film to achieve the above surface roughness. The average particle diameter of the inert particles is preferably 0.01 to 0.5 µm, more preferably 0.05 to 0.45 µm, particularly preferably 0.1 to 0.4 µm. The amount of the inert particles is preferably 0.1 to 0.5 wt%, more preferably 0.1 to 0.3 wt%.

Externally added particles are preferred as the inert particles. Examples of the externally added particles include monodisperse particles and agglomerated particles of calcium carbonate, colloidal silica, agglomerated silica, alumina and organic particles. Monodisperse particles, particularly spherical silica particles and crosslinked organic particles are preferably contained as the main inert particles in order to reduce the number of large projections.

Examples of the crosslinked organic particles include crosslinked polystyrene particles and crosslinked silicone resin particles.

Inert particles having different particle diameters may be used in combination. In this case, the inert particles having different particles diameter may be of the same kind or different kinds. A combination of inert particles of the same kind is, for example, a combination of silica particles whereas a combination of inert particles of the different kinds is, for example, a combination of colloidal silica and calcium carbonate or a combination of organic particles and alumina. When two different kinds of inert particles are used in combination, the average particle diameter of inert particles (A) having a smaller average particle diameter is preferably 0.01 to 0.5 µm, more preferably 0.05 to 0.4 µm, much more preferably 0.1 to 0.3 µm. When this average particle diameter is smaller than 0.01 µm, the surface slipperiness becomes unsatisfactory and when the average particle diameter is larger than 0. 5 µm, the recording output lowers disadvantageously. The content of the inert particles (A) is preferably 0.1 to 0.5 wt%, more preferably 0.1 to 0.4 wt%, particularly preferably 0.1 to 0.3 wt% to obtain a predetermined surface roughness.

The average particle diameter of inert particles (B) having a larger average particle diameter is preferably 0.1 to 1. 0 µm, more preferably 0.1 to 0. 6 µm, much more preferably 0.2 to 0.4 µm. When this average particle diameter is smaller than 0.1 µm, the surface slipperiness becomes unsatisfactory and when the average particle diameter is larger than 1.0 µm, the recording output lowers disadvantageously. The content of the inert particles (B) is preferably

0.001 to 0.1 wt%, more preferably 0.005 to 0.05 wt%, particularly preferably 0.005 to 0.03 wt% in order to obtain a predetermined friction coefficient.

The inert particles (A) and (B) are preferably spherical silica particles or crosslinked organic particles.

The both surfaces of the biaxially oriented polyester film of the present invention preferably have a center line average surface roughness (Ra) of 2 to 7 nm and not more than 20 scratches having a length of 2 mm or more per $m^2$, more preferably not more than 10 scratches per $m^2$, particularly preferably not more than 5 scratches per $m^2$.

The scratches having a length of 2 mm or more are produced by contact with a metallic roll or rubber roll in the step of stretching the polyester film. The number of scratches is obtained by illuminating the surface of the polyester film by the Cadnica Light and measuring the length of each scratch and the number of scratches on the surfaces of the film with the eye or through an optical microscope at a low magnification of X20 or less.

The incidence of surface scratches having a length of 0.3 to 1.0 mm is preferably 10 % or less, more preferably 5 % or less on both surfaces of the film.

The cause of producing scratches having a length of 0.3 to 1.0 mm is an oligomer adhering to a cooling drum and further to rolls for stretching in a longitudinal direction.

The incidence of scratches is obtained from the following equation.

Incidence of surface scratches (%) = (number of squares having a scratch(es)/number of squares in the field of view) x 100

The number of squares in the field of view is the number of squares seen when a 3 $m^2$ biaxially oriented polyester film is spread over a black metering table having a low reflectance and a 10 cm x 10 cm check pattern. The number of squares having a scratch(es) is the number of squares in which a scratch(es) having a width of 10 μm or more and a length of 0.3 to 1.0 mm is/are seen when the surface of the film is illuminated by a halogen lamp diagonally from above to detect the scratch(es) and observed through a 50-power transmission optical microscope.

When the number of scratches having a length of 2 mm or less is larger than 20 per $m^2$, a large number of errors (D/O) tend to occur and it is difficult to use the film in a high-density flexible disk.

<u>Adhesive layer</u>

The biaxially oriented polyester film of the present invention may have an adhesive layer on both sides. The adhesive layer comprises colloidal particles having an average particle diameter of 10 to 200 nm and a water-dispersible polyester resin having a sulfonate group. This adhesive layer is intended to improve adhesion to a magnetic layer formed thereon and has slipperiness as it holds colloidal particles on the surface.

The sulfonate group contained in the molecule of the above water-dispersible polyester is preferably a group represented by the formula $-SO_3M$ (M is the same equivalent amount as $-SO_3$ of a metal atom, ammonium group or quaternary amine). The amount of the sulfonate group is preferably 5 to 18 mol%, more preferably 8 to 18 mol%, particularly preferably 9 to 12 mol% based on the total of all the dicarboxylic acid components. When the amount is smaller than 5 mol%, the water dispersibility and coatability of the polyester tend to deteriorate and when the amount is larger than 18 mol%, the adhesion and antilock properties tend to lower.

To introduce the sulfonate group into the molecule of the polymer, a bifunctional compound having a sulfonate group, for example, dicarboxylic acid component having a sulfonate group such as 5-Na sulfoisophthalic acid, 5-ammonium sulfoisophthalic acid, 4-Na sulfoisophthalic acid, 4-methylammonium isophthalic acid, 2-Na sulfoisophthalic acid, 5-K sulfoisophthalic acid, 4-K sulfoisophthalic acid or 2-K sulfoterephthalic acid, or dihydroxy compound having a sulfonate group represented by the following formula (IV) or (V) is preferably used.

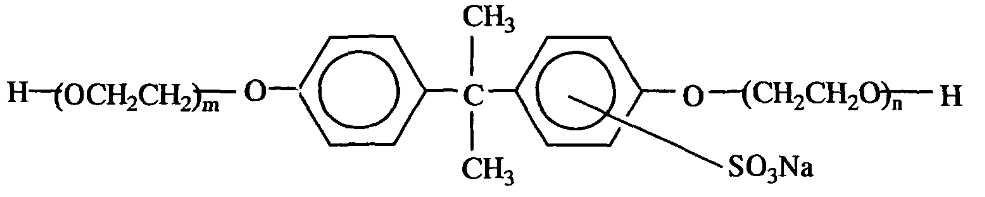

(IV)

(wherein m and n are each an integer of 1 to 2, with the proviso that m + n is 2 to 4.)

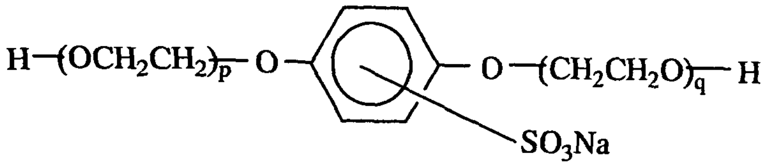

(V)

(wherein p and q are each an integer of 1 to 2, with the proviso that p + q is 2 to 4.)

Out of these, dicarboxylic acids having a sulfonate group are preferred and may be used in combination of two or more.

Examples of the acid component constituting the above water-dispersible polyester include terephthalic acid, isophthalic acid, phthalic acid,
2,6-naphthalenedicarboxylic acid,
4,4'-diphenyldicarboxylic acid,
1,4-cyclohexanedicarboxylic acid, adipic acid, sebacic acid, trimellitic acid, pyromellitic acid and dimer acid. These components may be used in combination of two or more.

Further, an unsaturated polybasic acid such as maleic acid, fumaric acid or itaconic acid, or a hydroxycarboxylic acid such as p-hydroxybenzoic acid or p-(β-hydroxyethoxy)benzoic acid may be used in combination with these in a small amount. The amount of the unsaturated polybasic acid or hydroxycarboxylic acid component is preferably not more than 10 mol%, more preferably not more than 5 mol%. When the amount of the acid component is larger than 10 mol%, the chipping resistance and antilock properties of the polyester resin deteriorate.

Examples of the dihydroxy compound component constituting the above water-dispersible polyester include ethylene glycol, 1,4-butanediol, neopentyl glycol, diethylene glycol, triethylene glycol, propylene glycol, 1,6-hexanediol, 1,4-cyclohexanedimethanol, xylylene glycol, dimethylolpropionic acid, glycerin, trimethylolpropane, poly(ethyleneoxide)glycol, poly(tetramethyleneoxide)glycol and adduct of bisphenol A with alkylene oxide. These components may be used in combination of two or more.

The secondary transition point (DSC method) of the above water-dispersible polyester is preferably 50 to 85° C, more preferably 60 to 80° C, much more preferably 65 to 75° C. When this secondary transition point is lower than 50° C, the chipping resistance and antiblock properties tend to deteriorate and when the secondary transition point is higher than 85°C, the adhesion and coatability are apt to lower.

The above water-dispersible polyester may be manufactured by any process known as the polyester production process. The types and amounts of the dicarboxylic acid component and the dihydroxy compound component may be suitably selected in consideration of the above characteristic properties of the polymer. The number average molecular weight of the polyester may be freely selected but preferably 5,000 to 28,000. When the number average molecular weight of the polyester is lower than 5, 000, desired polymer characteristic properties are hardly obtained, and the chipping resistance and antiblock properties tend to deteriorate. When the number average molecular weight is larger than 28,000, it is difficult to form a homogeneous coating solution, and the adhesion and coatability are apt to lower.

The adhesive layer may further contain a surfactant such as polyoxyethylene alkylphenyl ether or polyoxyalkylene alkyl ether having an HLB value of 11 to 20 as a resin component in addition to the above water-dispersible polyester.

The above surfactant is, for example, polyoxyethylene nonyphenyl ether or polyoxyethylene oleyl ether represented by the following formula (VI).

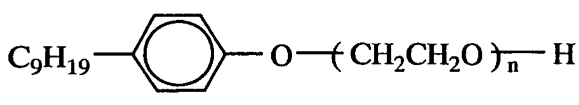

(VI)

When n is 8.5, this compound has an HLB value of 12.6 and when n is 30, it has an HLB value of 17.1.

When the HLB value of the above surfactant is larger than 20, hydrophilic nature becomes too strong, whereby the coatability of the coating solution tends to lower. When the HLB value is smaller than 11, the characteristic properties of the surfactant become weak and the stability of the coating solution lowers, thereby reducing coatability.

The above surfactant is preferably contained in an amount of 1 to 100 parts by weight based on 100 parts by weight of the water-dispersible polyester.

When the amount of the above surfactant is smaller than 1 part by weight based on 100 parts by weight of the water-dispersible polyester, the characteristic properties of the surfactant become slightly weak and the stability of

the coating solution tends to lower. When the amount is larger than 100 parts by weight, the content of the polyester in the coating solution lowers, whereby adhesion is apt to lower.

The above surfactant may be used in combination with another surfactant having an HLB value of 11 to 20. This combination is preferably a combination of a surfactant having an HLB value of 11 to 13 and a surfactant having an HLB value of more than 13 and 20 or less.

Particularly preferably, the above combination comprises 0.5 to 50 parts by weight of a surfactant having an HLB value of 11 to 13 and 0.5 to 99.5 parts by weight of a surfactant having an HLB value of 13 to 20 based on 100 parts by weight of the water-dispersible polyester resin. The HLB value of the surfactant having an HLB value of 13 to 20 is preferably 13 to 19, more preferably 17 to 18.

As the balance between the hydrophilic nature and lipophilic nature of the surfactant in use is suitably set by the combination, excellent coatability, antiblock properties and adhesion are obtained.

Further, the above adhesive layer contains colloidal particles having an average particle diameter of 10 to 200 nm.

The average particle diameter of the above colloidal particles is preferably 10 to 100 nm, more preferably 10 to 60 nm. When the average particle diameter is smaller than 10 nm, the particles become too small and antiblock properties and the chipping resistance of the magnetic layer are hardly obtained and when the average particle diameter is larger than 200 nm, the particles are easily chipped off and the chipping resistance of the base film tends to deteriorate.

Further, the colloidal particles preferably have a volume shape coefficient (f) represented by the following formula (3) of 0.4 to $\pi/6$.

$$f = V/D^3 \tag{3}$$

(wherein f is a volume shape coefficient, V is the average volume ($\mu m^3$) of the particles, and D is the average maximum diameter ($\mu m$) of the particles.)

When the volume shape coefficient (f) is smaller than 0.4, antiblock properties and the chipping resistance of the magnetic layer are hardly obtained.

The amount of the above colloidal particles is preferably 5 to 150 parts by weight, more preferably 10 to 100 parts by weight, much more preferably 20 to 80 parts by weight based on 100 parts by weight of the above water-dispersible polyester. When the amount is smaller than 5 parts by weight, antiblock properties are not fully obtained and when the amount is larger than 150 parts by weight, the particles tend to agglomerate and the chipping resistance of the base film is apt to deteriorate.

The relationship between the coating thickness (nm) of the adhesive layer and the average particle diameter (nm) of the colloidal particles is preferably represented by the following equation (4).

$$0.2 \leqq (\text{thickness of adhesive layer/average particle diameter of colloidal particles}) \leqq 3.0 \tag{4}$$

It is more preferably represented by the following equation (5), particularly preferably by the following equation (6).

$$0.4 \leqq (\text{thickness of adhesive layer/average particle diameter of colloidal particles}) \leqq 2.0 \tag{5}$$

$$0.5 \leqq (\text{thickness of adhesive layer/average particle diameter of colloidal particles}) \leqq 1.5 \tag{6}$$

When the value of (thickness of adhesive layer/average particle diameter of colloidal particles) is smaller than 0 . 2 , the particles are apt to be chipped off and the chipping resistance of the base film tends to deteriorate. When the value is larger than 3.0, antiblock properties and the chipping resistance of the magnetic layer are hardly obtained.

Preferably, the colloidal particles are spherical silica particles or crosslinked organic particles.

The spherical silica particles are as described above and the crosslinked organic particles are desirably particles of a polymer having a 5 % heat weight reduction temperature in a nitrogen gas atmosphere of preferably 310° C or higher, more preferably 330°C or higher, particularly preferably 350°C or higher. Examples of the crosslinked organic particles include crosslinked silicone resin particles, crosslinked acrylic resin particles, crosslinked polystyrene particles, Teflon particles and polyimide particles. Out of these, crosslinked silicone resin particles and crosslinked acrylic resin particles are preferred, and core-shell type particles are preferred from the viewpoint of adhesion to a binder.

Preferably, the adhesive layer contains 100 parts by weight of a water-dispersible polyester, 1 to 100 parts by weight of a surfactant having an HLB value of 11 to 20, and 5 to 150 parts by weight of colloidal particles having an average particle diameter of 10 to 200 nm.

The coating solution, preferably aqueous coating solution for forming the adhesive layer may contain other resin, antistatic agent, lubricant, filler, colorant, ultraviolet light absorber, antioxidant, surfactant and crosslinking agent such as melamine, epoxy or aziridine compound for improving the heat resistance and antiblock properties of the adhesive. The aqueous coating solution may contain a small amount of an organic solvent.

The solid content of the coating solution may be arbitrarily determined but preferably 1 to 15 wt%, more preferably 1 to 12 wt%, much more preferably 1 to 10 wt%.

The amount of wet coating is preferably 0.5 to 20 g, more preferably 1 to 10 g based on 1 $m^2$ of the running film (uniaxially stretched film), and the thickness of coating after drying is preferably 5 to 200 nm, more preferably 10 to 100 nm.

Known coating techniques may be used. For example, roll coating, gravure coating, reverse coating, roll brushing, spray coating, air knife coating, impregnation and curtain coating may be used alone or in combination.

The coating solution may be applied to a biaxially oriented polyester film but preferably to a polyester film which has been stretched in the longitudinal direction.

The uniaxially oriented polyester film coated with an aqueous coating solution is dried, stretched in the transverse direction and optionally in the longitudinal direction again, and heat set. For example, the uniaxially oriented polyester film which has been stretched in the longitudinal direction and coated with an aqueous coating solution is sent to a stenter to be stretched in the transverse direction and optionally the longitudinal direction again, and heat set. During this, the coating solution is dried to form a continuous coating film on the film. Drying may be carried out before or during stretching in the transverse direction.

<u>Method of manufacturing a biaxially oriented polyester film</u>

Although the biaxially oriented polyester film of the present invention is preferably manufactured by sequential biaxial orientation, it may be manufactured by simultaneous biaxial orientation or with a simple test apparatus.

For instance, it can be manufactured by melt extruding a fully dried polyester resin at a temperature of melting point to (melting point + 70)° C, filtering it with a high-precision filter having an average opening of 20 µm or less, quenching it on a casting drum to obtain an unstretched film, biaxially stretching the unstretched film sequentially or simultaneously and heat setting the biaxially oriented film.

Since an agglomerate of inert particles and dust contained in the film often become the cause of large projections in the biaxially oriented polyester film in the present invention, it is preferred to intensify the filtration of the polymer at the time of melting and film formation and to use a filter having an opening of 20 µm or less.

The biaxial orientation is preferably sequential biaxial orientation, and the unstretched film is stretched to 2.3 to 5.8 times in the longitudinal direction at 70 to 170°C. At this point, the stretching temperature is preferably adjusted or auxiliary heating is preferably carried before stretching so that the difference in refractive index between the front and rear surfaces of the film becomes 0.002 or less and the difference in temperature between the front surface and the rear surface of the film at the time of stretching becomes 20°C or less.

Preferably, the film is then stretched to 2.3 to 5.8 times in the transverse direction at 70 to 170°C with the stenter and then heat set under tension or limit shrinkage at 150 to 250° C. The heat setting time is preferably 10 to 30 seconds. The stretching conditions in the longitudinal and transverse directions are selected to ensure that the physical properties of the obtained biaxially oriented polyester film become almost the same in the both directions, the Young's modulus in each direction is 5 GPa or more, and the difference between the largest value and the smallest value is 1 GPa or less. In the case of simultaneous biaxial orientation, the above stretching temperature, draw ratio and heat setting temperature can be used.

Three-stage orientation or four-stage orientation in which the biaxially oriented polyester film is further stretched in the longitudinal direction and/or transverse direction again may be employed as required.

A laminated polyester film comprising the biaxially oriented polyester film of the present invention and an adhesive layer formed on both sides of the biaxially oriented polyester film is also advantageously used as a base film

for a flexible disk.

According to the present invention, there is also provided a flexible disk comprising the laminated polyester film of the present invention and a magnetic layer formed on the adhesive layers on the front and rear surfaces of the laminated polyester film, preferably a flexible disk which reads data with an MR head.

The above flexible disk preferably has a diameter of 2 to 10 cm.

Technologies known per se may be used to form the magnetic layer.

Examples

The following examples are given to further illustrate the present invention. "Parts" in examples means parts by weight. Various physical property values and characteristic properties in the present invention were measured and defined as follows.

(1) average particle diameter (DP) of inert particles

This is measured with the CP-50 centrifugal particle size analyzer of Shimadzu Corporation. A particle diameter corresponding to 50 mass% is read from an integrated curve showing the relationship between each particle diameter and the amount of particles having each particle diameter calculated based on the obtained centrifugal sedimentation curve and taken as the above average particle diameter (Particle Measurement Technology published by Nikkan Kogyo Press, pp. 242 to 247, 1975).

(2) total film thickness

10 films are assembled together to ensure that no dust is contained between them, and the thickness of the assembly is measured with a printing electronic micrometer to calculate the thickness of each film.

(3) heat shrinkage factor

A 30 cm-square film whose length has been measured accurately is placed in an oven heated at 105° C under no load, kept in that state for 30 minutes, taken out from the oven and cooled to room temperature to read its dimensional change. The directions of reading the length of the film are 0° direction, 20° direction, 30° direction, 40° direction, 50° direction, 60° direction, 70° direction, 80° direction, 90° direction, 100° direction, 110° direction, 120° direction, 130° direction, 140° direction, 150° direction, 160° direction and 170° direction, in the clockwise direction of every 10° of the film plane when one of the longitudinal directions of the film is 0° direction. Out of the heat shrinkage factors in these directions, the largest value and the smallest value are obtained. The heat shrinkage factor is obtained from the length ($L_0$) before the heat treatment and the amount of a dimensional change ($\Delta L$) by the heat treatment based on the following equation (7).

$$\text{Heat shrinkage factor} = (\Delta L/L_0) \times 100\ [\%] \qquad (7)$$

(4) Young's modulus

10 mm wide films are sampled from 0° direction, 20° direction, 30° direction, 40° direction, 50° direction, 60° direction, 70° direction, 80° direction, 90° direction, 100° direction, 110° direction, 120° direction, 130° direction, 140° direction, 150° direction, 160° direction and 170° direction, in the clockwise direction of every 10° of the film plane when one of the longitudinal directions of the film is 0° direction. These samples are set in a tensile tester at a chuck interval of 100 mm to measure the Young's moduli of these samples at 23°C, 65 %RH, a pulling rate of 200 mm/min with a tensile tester. Out of the Young's moduli in these directions, the largest value and the smallest value are obtained.

(5) film surface roughness (center line average surface roughness Ra)

The surface roughnesses of both sides of the film in the longitudinal direction are measured with the probe surface roughness meter of Kosaka Kenkyusho Co., Ltd. at a probe load of 80 mg, a measurement length of 4 mm and a cut-off of 0.25 mm. Ra is defined in "Measurement and Evaluation Methods of Surface Roughness" written by Jiro Nara (Sogo Gijutsu Center, 1983).

(6) agglomeration ratio

The surface of the film is plasma etched and observed through a scanning microscope at a magnification of X30, 000 to obtain the agglomeration ratio of inert particles from the following equation (8).

$$\text{Agglomeration ratio} = (\text{number of agglomerates/total number of particles}) \times 100\ [\%] \quad (8)$$

In the above equation (8), the total number of particles is the number of particles each of which is counted as one and the number of agglomerates is the number of agglomerates each of which is counted as one. An agglomerate is defined as a group of particles which completely adhere to one another. Fig. 1 shows a count example. In Fig. 1, C denotes an agglomerate of particles. In Fig. 1, the total number of particles is 13, the number of agglomerates (agglomerates of two or more particles) is 3, and the agglomeration ratio is 23 %.

(7) winding properties

After winding conditions at the time of slitting are optimized, 100 rolls of films having a width of 1,000 mm and a length of 3,000 m are slit at a rate of 100 m/min, rolls without irregularities, protrusions and wrinkles on the surfaces of the films after slitting are accepted, and the winding properties of the rolls are evaluated based on the following criteria.

◎ : 80 or more accepted rolls
○: 60 to 79 accepted rolls
×: 59 or less accepted rolls

(8) large projections and deposit

The surface to be measured is placed on a biaxially oriented polyethylene terephthalate film having a center line average surface roughness Ra of 1.5 nm and a 10-point average height Rz of 10 nm and closely bonded to the film, and the resulting assembly is illuminated with a sodium D-line (589 nm) as a light source to count the number of interference fringes having one or more rings formed by large projections in a measurement area of 100 $cm^2$ in order to evaluate an error (D/O).

◎ : less than 10 per 100 $cm^2$
○: 10 or more and less than 20 per 100 $cm^2$
×: 20 or more per 100 $cm^2$

(9) refractive index

The refractive indices of the front and rear surfaces of the film are measured by sampling specimens from the in-plane direction of the film at a pitch of 10° and using sodium D-line (589 nm) as a light source, Abbe refractometer and methylene phosphorus iodide as an intermediate solution (measuring clockwise from the longitudinal direction).

(10) glass transition point (Tg)

About 10 mg of a sample is enclosed in an aluminum pan for measurement, the aluminum pan is set in a differential calorimeter (V4. OB2000 DSC of Du Pont Co., Ltd.), heated from 25° C to 300° C at a rate of 20°C/min and maintained at 300°C for 1 minute, and the sample is taken out and placed on ice to be quenched. This pan is set in the differential calorimeter again and heated from 25° C at a rate of 20° C/min to measure its glass transition temperature (Tg: °C).

(11) melting point (Tm)

About 10 mg of the sample is enclosed in an aluminum pan for measurement, the aluminum pan is set in a differential calorimeter (V4. OB2000 DSC of Du Pont Co., Ltd.), heated from 25° C to 300° C at a rate of 20°C/min and maintained at 300°C for 1 minute, and the sample is taken out and placed on ice to be quenched. This pan is set in the differential calorimeter again and heated from 25° C at a rate of 20° C/min to measure its melting point (Tm: °C).

(12) intrinsic viscosity

The intrinsic viscosity (IV: dl/g) of a polyester is measured in an o-chlorophenol solution at 25°C.

(13) surface scratches having a length of 2 mm or more

The front surface or rear surface of the film is illuminated with the Cadnica Light to be observed with the eye or through an optical microscope at a low magnification of X20 or less in order to measure the lengths and number of scratches.

(14) incidence of scratches having a length of 0.3 to 1.0 mm

A biaxially oriented polyester film is spread over a black measurement table having a low reflectance on which lines are drawn to form 10 cm x 10 cm squares to ensure that it is not scratched and illuminated by a halogen lamp diagonally from above to observe a 3 $m^2$ area of the surface of the film. Portions in which film scratches are detected are marked. The marked portions are extracted and confirmed with a 50-power transmission microscope to obtain the incidence of scratches having a width of 10 μm or more and a length of 0.3 to 1.0 mm from the following equation.

Incidence of surface scratches (%) = (number of squares in which a scratch(es) is/are found/total number of squares in the field of view) x 100

The number of squares in the field of view is the number of squares seen when the 3 $m^2$ biaxially oriented polyester film is spread over the black measurement table having a low reflectance on which lines are drawn to form 10 cm x 10 cm squares. The number of squares in which a scratch(es) is /are found is the number of squares in which a scratch(es) having a width of 10 μm or more and a length of 0.3 to 1.0 mm is/are found by the above observation method.

Example 1

<production of copolyester resin>

90 parts of dimethyl naphthalene-2,6-dicarboxylate, 6 parts of dimethyl isophthalate, 4 parts of 5-sodium sulfoisophthalic acid, 70 parts of ethylene glycol and 30 parts of propylene oxide adduct of bisphenol A represented by the following formula were charged into an ester interchange reactor, 0.05 part of tetrabutoxytitanium was added, and they were heated at 230° C in a nitrogen atmosphere to carry out an ester interchange reaction while the formed methanol was distilled off.

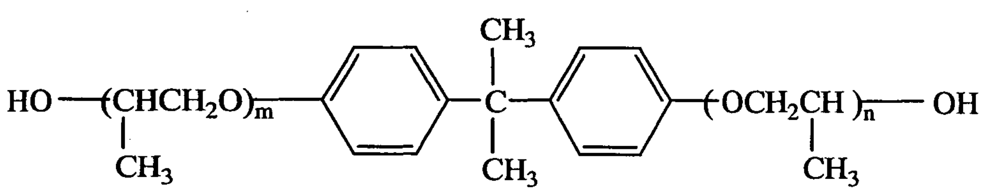

(wherein m + n = 4 (average value).)

After 0.6 part of the Irganox 1010 (of Ciba Geigy Co., Ltd.) was added to this reaction system, a polycondensation reaction was carried out by gradually raising the inside temperature of the system to 255°C and reducing the inside pressure of the system to 1 mmHg to obtain a copolyester resin having an intrinsic viscosity of 0.64.

<preparation of polyester water dispersion>

20 parts of this copolyester resin was dissolved in 80 parts of tetrahydrofuran, and 180 parts of water was added dropwise to the obtained solution under agitation at a rate of 10,000 rpm/min to obtain a bluish opal dispersion.

This dispersion was then distilled under a reduced pressure of 20 mmHg to remove tetrahydrofuran. Thus, a polyester water dispersion having a solid content of 10 wt% was obtained.

An aqueous coating solution (solid content of 1.8 wt%) comprising 100 parts of the thus obtained polyester water dispersion, 10 parts of crosslinked acrylic fine particles having an average particle diameter of 50 nm and 14 parts of polyoxyethylene nonyphenyl ether as a surfactant was prepared.

<production of polyester film>

A mixture of 100 parts of dimethyl-2,6-naphthalate and 70 parts of ethylene glycol and 5 mmol% of titanium trimellitate were charged into an SUS vessel capable of carrying out a pressure reaction, an ester interchange reaction was carried out by increasing the inside pressure of the vessel to 0.07 MPa and the inside temperature of the vessel from 140°C to 240°C, 30 mmol% of trimethyl phosphate was added to terminate the ester interchange reaction substantially, and 0.01 wt% of crosslinked silicone particles having an average particle diameter of 0.3 µm and 0.3 wt% of silica particles having an average particle diameter of 0.1 µm were added.

Thereafter, the reaction product was transferred to a polymerizer and heated at 290°C to carry out a polycondensation reaction under a high vacuum degree of 0.2 mmHg or less in order to obtain a polyester resin composition having an intrinsic viscosity of 0.60 and a diethylene glycol content of 1.5 % (Tm: 269°C, Tg: 121°C).

A pellet of this polyethylene-2,6-naphthalate was dried at 170°C for 6 hours, supplied into the hopper of an extruder, molten at a temperature of 280 to 300°C, filtered with a high-precision filter having an average opening of 10 µm, surface finished from a die to 0.3 S and extruded onto a rotary cooling drum having a surface temperature of 60° C to obtain a 650 µm-thick unstretched film.

The obtained unstretched film was pre-heated at 120° C, heated between low-speed and high-speed rolls with IR heaters having surface temperatures of 900° C and 800° C from 15 mm above and from 15 mm below to be stretched to 3.5 times at a film top surface temperature of 145° C and a film bottom surface temperature of 150°C and cooled, respectively, and the above prepared coating solution was applied to both sides of the uniaxially stretched film in a dry state to a thickness of 30 nm. The film was then supplied to a stenter to be stretched to 3.7 times in the transverse direction at 145° C. The obtained biaxially oriented film was heat set with hot air at 230 ° C for 10 seconds to obtain a 50 µm-thick biaxially oriented polyester film. The characteristic properties of the obtained film are shown in Table 1.

Further, a magnetic coating solution having the following composition was applied to the obtained biaxially oriented polyester film to a thickness of 1 µm.

(magnetic coating solution)

200 parts by weight of $\gamma$-$Fe_2O_3$, 30 parts by weight of vinyl chloride-vinyl acetate copolymer resin (VAGH of UCC Co., Ltd.), 20 parts by weight of a polyurethane (PP-88 of Nippon Polyurethane Co., Ltd.), 40 parts by weight of an isocyanate compound (Colonate HL of Nippon Polyurethane Co., Ltd.), 20 parts by weight of carbon (average size of 0. 5 µm), 2 parts by weight of dimethylsiloxane, 70 parts by weight of toluene, 70 parts by weight of methyl ethyl ketone and 70 parts by weight of cyclohexanone were fully mixed together under agitation to prepare the coating solution.

Thereafter, the coated surface was calendered. Thereafter, a flexible disk having an outer diameter of 3.5 inches was obtained. The characteristic properties of the obtained flexible disk are shown in Table 1.

As obvious from Table 1, the film rarely experienced an error (D/O) and had excellent winding properties.

Example 2

A biaxially oriented polyester film and a flexible disk were obtained in the same manner as in Example 1 except that 0.15 wt% of spherical silica particles having an average particle diameter of 0.1 µm was added as a lubricant (inert particles) and a coating solution was not applied. The characteristic properties of the obtained film and flexible disk are shown in Table 1. As obvious from Table 1, the film rarely experienced an error (D/O) and had excellent winding properties.

Example 3

A polyester water dispersion was obtained in the same manner as in Example 1 except that 14 parts of polyoxyalkylene alkyl ether (Lionol L-950 of Lion Corporation) was used as a surfactant to be added to the polyester water dispersion. The polyester film was produced as follows.

<production of polyester film>

A mixture of 100 parts of dimethyl-2,6-naphthalate and 70 parts of ethylene glycol and 5 mmol% of titanium trimellitate were charged into an SUS vessel capable of carrying out a pressure reaction, an ester interchange reaction was carried out by increasing the inside pressure of the vessel to 0.07 MPa and the inside temperature of the vessel from 140°C to 240°C, 30 mmol% of trimethyl phosphate was added to terminate the ester interchange reaction substantially, and 0.01 wt% of crosslinked silicone particles having an average particle diameter of 0.3 µm and 0.3 wt% of silica particles having an average particle diameter of 0.1 µm were added.

Thereafter, the reaction product was transferred to a polymerizer and heated at 290°C to carry out a polycondensation reaction under a high vacuum degree of 0.2 mmHg or less in order to obtain a polyester resin composition having an intrinsic viscosity of 0.60 and a diethylene glycol content of 1.5 % (Tm: 269°C, Tg: 121° C).

A pellet of this polyethylene-2,6-naphthalate was dried at 170°C for 6 hours, supplied into the hopper of an extruder, molten at a temperature of 280 to 300° C, filtered with a high-precision filter having an average opening of 10 µm, surface finished from a die to 0.3 S and extruded onto a rotary cooling drum having a surface temperature of 60°C to obtain a 650 µm-thick unstretched film.

The obtained unstretched film was pre-heated at 120° C, heated between low-speed and high-speed rolls with IR heaters having surface temperatures of 900° C and 800° C from 15 mm above and from 15 mm below to be stretched to 3.5 times at a film top surface temperature of 145° C and a film bottom surface temperature of 150°C and cooled, respectively, and the above prepared coating solution was applied to both sides of the uniaxially stretched film in a dry state to a thickness of 30 nm. The film was then supplied to a stenter to be stretched to 3.7 times in the transverse direction at 145° C. The rollers situated before and after stretching were equipped with a cleaner which moved over the surface not in contact with the film of the roller in the crosswide direction continuously. Deposit on the surfaces of the rollers was removed with cleaning cloth situated in a portion in contact with the roller of the cleaner. The obtained biaxially oriented film was heat set with hot air at 230° C for 10 seconds to obtain a 50 µm-thick biaxially oriented polyester film. The characteristic properties of the obtained film are shown in Table 2.

Further, a magnetic coating solution having the following composition was applied to the obtained biaxially oriented polyester film to a thickness of 1 µm.

(magnetic coating solution)

200 parts by weight of γ-$Fe_2O_3$, 30 parts by weight of vinyl chloride-vinyl acetate copolymer resin (VAGH of UCC Co., Ltd.), 20 parts by weight of a polyurethane (PP-88 of Nippon Polyurethane Co., Ltd.), 40 parts by weight of an isocyanate compound (Colonate HL of Nippon Polyurethane Co., Ltd.), 20 parts by weight of carbon (average size of 0.5 µm), 2 parts by weight of dimethylsiloxane, 70 parts by weight of toluene, 70 parts by weight of methyl ethyl ketone and 70 parts by weight of cyclohexanone were fully mixed together under agitation to prepare the coating solution.

Thereafter, the coated surface was calendered. Thereafter, a flexible disk having an outer diameter of 3.5 inches was obtained. The characteristic properties of the obtained flexible disk are shown in Table 2.

As obvious from Table 2, the film rarely experienced an error (D/O) and had excellent winding properties.

Example 4

A biaxially oriented polyester film and a flexible disk were obtained in the same manner as in Example 3 except that 0.15 wt% of spherical silica particles having an average particle diameter of 0.1 µm was added as a lubricant (inert particles) and a coating solution was not applied. The characteristic properties of the obtained film and flexible disk are shown in Table 2. As obvious from Table 2, the film rarely experienced an error (D/O) and had excellent winding properties.

Example 5

A polyester water dispersion was obtained in the same manner as in Example 1 except that 14 parts of polyoxyalkylene alkyl ether (Lionol L-950 of Lion Corporation) was used as a surfactant to be added to the polyester water dispersion. The polyester film was produced as follows.

<production of polyester film>

A mixture of 100 parts of dimethyl-2,6-naphthalate and 70 parts of ethylene glycol and 5 mmol% of titanium trimellitate were charged into an SUS vessel capable of carrying out a pressure reaction, an ester interchange reaction

was carried out by increasing the inside pressure of the vessel to 0.07 MPa and the inside temperature of the vessel from 140° C to 240° C, 30 mmol% of trimethyl phosphate was added to terminate the ester interchange reaction substantially, and 0.01 wt% of crosslinked silicone particles having an average particle diameter of 0.3 μm and 0.3 wt% of silica particles having an average particle diameter of 0.1 μm were added.

Thereafter, the reaction product was transferred to a polymerizer and heated at 290°C to carry out a polycondensation reaction under a high vacuum degree of 0.2 mmHg or less in order to obtain a polyester resin composition having an intrinsic viscosity of 0.60 and a diethylene glycol content of 1.5 % (Tm: 269° C, Tg: 121° C).

A pellet of this polyethylene-2,6-naphthalate was dried at 170°C for 6 hours, supplied into the hopper of an extruder, molten at a temperature of 280 to 300° C, filtered with a high-precision filter having an average opening of 10 μm, surface finished from a die to 0.3 S and extruded onto a rotary cooling drum having a surface temperature of 60° C to obtain a 650 μm-thick unstretched film. The above prepared coating solution was applied to both sides of the unstretched film in a dry state to a thickness of 30 nm.

The obtained unstretched film was stretched to 3.5 times in the longitudinal direction and to 3.7 times in the transverse direction at 150°C simultaneously and heat set with hot air at 230° C for 10 seconds to obtain a 50 μm-thick biaxially oriented polyester film. The characteristic properties of the obtained film are shown in Table 2.

Further, a magnetic coating solution having the following composition was applied to the obtained biaxially oriented polyester film to a thickness of 1 μm.

(magnetic coating solution)

200 parts by weight of $\gamma$-$Fe_2O_3$, 30 parts by weight of vinyl chloride-vinyl acetate copolymer resin (VAGH of UCC Co., Ltd.), 20 parts by weight of a polyurethane (PP-88 of Nippon Polyurethane Co., Ltd.), 40 parts by weight of an isocyanate compound (Colonate HL of Nippon Polyurethane Co. , Ltd.), 20 parts by weight of carbon (average size of 0.5 μm), 2 parts by weight of dimethylsiloxane, 70 parts by weight of toluene, 70 parts by weight of methyl ethyl ketone and 70 parts by weight of cyclohexanone were fully mixed together under agitation to prepare the coating solution.

Thereafter, the coated surface was calendered. Thereafter, a flexible disk having an outer diameter of 3.5 inches was obtained. The characteristic properties of the obtained flexible disk are shown in Table 2.

As obvious from Table 2, the film rarely experienced an error (D/O) because it had few surface scratches.

Example 6

A biaxially oriented polyester film and a flexible disk were obtained in the same manner as in Example 5 except that 0.15 wt% of spherical silica particles having an average particle diameter of 0.1 μm were added as a lubricant (inert particles) and a coating solution was not applied. The characteristic properties of the obtained film and flexible disk are shown in Table 2. As obvious from Table 2, the film rarely experienced an error (D/O) and had excellent winding properties.

Example 7

A biaxially oriented polyester film and a flexible disk were obtained in the same manner as in Example 3 except that the crosslinked silicone particles having an average particle diameter of 0.3 μm were changed to spherical silica particles as a lubricant (inert particles). The characteristic properties of the obtained film and flexible disk are shown in Table 2. As obvious from Table 2, the film rarely experienced an error (D/O) and had excellent winding properties.

Comparative Example 1

A biaxially oriented polyester film and a flexible disk were obtained in the same manner as in Example 1 except that the lubricant (inert particles) was not added. The characteristic properties of the obtained film and flexible disk are shown in Table 1. As obvious from Table 1, the film had poor winding properties because its surface was too flat.

Comparative Example 2

A biaxially oriented polyester film and a flexible disk were obtained in the same manner as in Example 1 except that 0.04 wt% of calcium carbonate particles having an average particle diameter of 0.6 μm and 0.3 wt% of spherical silica particles having an average particle diameter of 0.1 μm were added as lubricants (inert particles). The characteristic properties of the obtained film and flexible disk are shown in Table 1. As obvious from Table 1, the film

experienced an error (D/O) because its surface was too rough.

Comparative Example 3

A biaxially oriented polyester film and a flexible disk were obtained in the same manner as in Example 1 except that 30 mmol% of manganese acetate as an ester interchange catalyst, 40 mmol% of antimony trioxide as a polymerization catalyst and 20 mmol% of phosphorous acid as a stabilizer were used. The characteristic properties of the obtained film and flexible disk are shown in Table 1. As obvious from Table 1, the film experienced an error (D/O) due to coarse projections formed by the agglomeration of fine particles and the chipping of the film.

Comparative Example 4

A mixture of 100 parts of dimethyl terephthalate and 70 parts of ethylene glycol and 5 mmol% of titanium trimellitate were charged into an SUS vessel capable of carrying out a pressure reaction, an ester interchange reaction was carried out by increasing the inside pressure of the vessel to 0.07 MPa and the inside temperature of the vessel from 140° C to 240°C, 30 mmol% of trimethyl phosphate was added to terminate the ester interchange reaction substantially, and 0.01 wt% of crosslinked silicone particles having an average particle diameter of 0.3 µm and 0.3 wt% of silica particles having an average particle diameter of 0.1 µm were added.

Thereafter, the reaction product was transferred to a polymerizer and heated at 290°C to carry out a polycondensation reaction under a high vacuum degree of 0.2 mmHg or less in order to obtain a polyester resin composition having an intrinsic viscosity of 0.60 and a diethylene glycol content of 1.5 % (Tm: 258°C, Tg: 78°C).

A pellet of this polyethylene terephthalate was dried at 170° C for 3 hours, supplied into the hopper of an extruder, molten at a temperature of 280 to 300°C, filtered with a high-precision filter having an average opening of 10 µm, surface finished from a die to 0.3 S and extruded onto a rotary cooling drum having a surface temperature of 60° C to obtain a 680 µm-thick unstretched film.

The obtained unstretched film was pre-heated at 120° C, heated between low-speed and high-speed rolls with IR heaters having surface temperatures of 750°C and 700°C from 15 mm above and from 15 mm below to be stretched to 3.5 times at a film top surface temperature of 145°C and a film bottom surface temperature of 150°C and cooled, respectively, and the above prepared coating solution was applied to one side of the uniaxially stretched film in a dry state to a thickness of 30 nm. The film was then supplied to a stenter to be stretched to 3.9 times in the transverse direction at 145° C. The obtained biaxially oriented film was heat set with hot air at 230 ° C for 10 seconds to obtain a 50 µm-thick biaxially oriented polyester film. The characteristic properties of the obtained film are shown in Table 1. As obvious from Table 1, the film had a large thermal shrinkage factor and low flatness and experienced an error (D/O)

Table 1

| | unit | Example 1 | Example 2 | Comparative Example 1 | Comparative Example 2 | Comparative Example 3 | Comparative Example 4 |
|---|---|---|---|---|---|---|---|
| Polymer | | PEN | PEN | PEN | PEN | PEN | PET |
| Inert particles | | | | | | | |
| First component | | | | | | | |
| Type | | Crosslinked silicone | Spherical silica | | Calcium Carbonate | Crosslinked silicone | Crosslinked silicone |
| Average particle diameter | µm | 0.3 | 0.1 | | 0.6 | 0.3 | 0.3 |
| Content | wt% | 0.01 | 0.15 | | 0.04 | 0.01 | 0.01 |
| Second Component | | | | | | | |
| Type | | Spherical silica | | | Spherical silica | Spherical silica | Spherical silica |
| Average particle diameter | µm | 0.1 | | | 0.1 | 0.1 | 0.1 |
| Content | wt% | 0.3 | | | 0.3 | 0.3 | 0.3 |
| Center line average surface roughness | | | | | | | |
| Ra (surface a) | | 5.5 | 2.5 | 1.5 | 12 | 5.5 | 5.5 |
| Ra (surface d) | | 5.5 | 2.5 | 1.5 | 12 | 5.5 | 5.5 |
| Agglomeration ratio | % | 14 | 14 | 0 | 14 | 37 | 14 |
| Young's modulus | | | | | | | |
| Largest value | GPa | 7.3 | 7.3 | 7.3 | 7.3 | 7.3 | 5.5 |
| Smallest value | GPa | 6.7 | 6.7 | 6.7 | 6.7 | 6.7 | 5.0 |
| Heat shrinkage factor | | | | | | | |
| Largest value | % | 0.1 | 0.1 | 0.1 | 0.1 | 0.1 | 1.1 |
| Smallest value | % | 0.1 | 0.1 | 0.1 | 0.1 | 0.1 | 0.6 |
| Error (D/O) | | ○ | ◎ | ◎ | × | × | × |
| Winding properties | | ◎ | ○ | × | ◎ | ◎ | ◎ |

Table 2

| | unit | Example 3 | Example 4 | Example 5 | Example 6 | Example 7 |
|---|---|---|---|---|---|---|
| Polymer | | PEN | PEN | PEN | PEN | PEN |
| Inert particles | | | | | | |
| First component | | | | | | |
| Type | | Crosslinked silicone | Spherical silica | Crosslinked silicone | Spherical silica | Spherical silica |
| Average particle diameter | μm | 0.3 | 0.1 | 0.3 | 0.1 | 0.3 |
| Content | wt% | 0.01 | 0.15 | 0.01 | 0.15 | 0.01 |
| Second Component | | | | | | |
| Type | | Spherical silica | | Spherical silica | | Spherical silica |
| Average particle diameter | μm | 0.1 | | 0.1 | | 0.1 |
| Content | wt% | 0.3 | | 0.3 | | 0.3 |
| Center line average surface roughness | | | | | | |
| Ra (surface a) | | 5.5 | 2.5 | 5.5 | 2.5 | 5.5 |
| Ra (surface d) | | 5.5 | 2.5 | 5.5 | 2.5 | 5.5 |
| Agglomeration ratio | % | 14 | 14 | 14 | 14 | 14 |
| Young's modulus | | | | | | |
| Largest value | GPa | 7.3 | 7.3 | 7.3 | 7.3 | 7.3 |
| Smallest value | GPa | 6.7 | 6.7 | 6.7 | 6.7 | 6.7 |

Table 2 (continued)

| | unit | Example 3 | Example 4 | Example 5 | Example 6 | Example 7 |
|---|---|---|---|---|---|---|
| Heat shrinkage factor | | | | | | |
| Largest value | % | 0.1 | 0.1 | 0.1 | 0.1 | 0.1 |
| Smallest value | % | 0.1 | 0.1 | 0.1 | 0.1 | 0.1 |
| Surface Scratches | | | | | | |
| 2 mm or more | | | | | | |
| surface a | per $m^2$ | 3 | 5 | 3 | 3 | 3 |
| surface d | per $m^2$ | 3 | 5 | 3 | 3 | 3 |
| 0.3 to 1.0 mm | | | | | | |
| surface a | % | 0 | 1 | 0 | 1 | 0 |
| surface d | % | 1 | 3 | 0 | 3 | 1 |
| Error (D/O) | | ○ | ◎ | ○ | ◎ | ○ |
| Winding properties | | ◎ | ○ | ◎ | ○ | ◎ |

In the columns of center line average surface roughness and surface scratches in Tables 1 and 2, (surface

a) is the surface not in contact with the cooling drum of the formed film and (surface d) is the surface in contact with the cooling drum of the formed film.

As described above, the biaxially oriented polyester film of the present invention has excellent characteristic properties as a base film useful for flexible disks, particularly high-density magnetic disks.

## Claims

1. A biaxially oriented polyester film for flexible disks, comprising a polyester containing inert particles, wherein

   (A) the smallest value of Young's modulus in the planar direction is 5 GPa or more, and the difference between the largest value and the smallest value of Young's modulus in the planar direction is 1 GPa or less;
   (B) the largest value of heat shrinkage factor when the film is heated at 105° C for 30 minutes is 0.6 % or less, and the difference between the largest value and the smallest value of heat shrinkage factor when the film is heated at 105°C for 30 minutes is 0.3 % or less;
   (C) the center line average surface roughnesses (Ra) of the both surfaces of the film are in the range of 2 to 10 nm; and
   (D) the agglomeration ratio of the inert particles in the film is 30 % or less.

2. The biaxially oriented polyester film according to claim 1, wherein the polyester contains a titanium compound soluble in a polyester, and the content of the titanium compound is 2 to 10 mmol% in terms of elemental titanium (Ti) based on the total of all the recurring units of the polyester.

3. The biaxially oriented polyester film according to claim 2, wherein the polyester contains a phosphorus compound and the titanium compound, and their contents satisfy the following expression (1):

$$0.5 \leqq P/Ti \leqq 10 \qquad (1)$$

   wherein P is a value (mmol%) obtained by dividing the number of mols of elemental phosphorus of a phosphonate compound by the total number of mols of all the recurring units of the polyester , and Ti is a value (mmol%) obtained by dividing the number of mols of elemental titanium of the titanium compound by the total number of mols of all the recurring units of the polyester.

4. The biaxially oriented polyester film according to claim 2, wherein the polyester contains a phosphorus compound and the titanium compound, and their contents satisfy the following expression (2):

$$5 \leqq P + Ti \leqq 100 \qquad (2)$$

   wherein P and Ti are as defined hereinabove.

5. The biaxially oriented polyester film according to claim 2, wherein the titanium compound is a polycondensation reaction catalyst for the polyester.

6. The biaxially oriented polyester film according to claim 2, wherein the titanium compound is a tetraalkoxide represented by the following formula (I):

$$Ti(OR^1)(OR^2)(OR^3)(OR^4) \qquad (I)$$

   wherein $R^1$, $R^2$, $R^3$ and $R^4$ are each independently an alkyl group or phenyl group.

7. The biaxially oriented polyester film according to claim 2, wherein the titanium compound is a reaction product of a tetraalkoxide represented by the following formula (I) and an aromatic polycarboxylic acid represented by the following formula (II):

$$Ti(OR^1)(OR^2)(OR^3)(OR^4) \quad (I)$$

wherein $R^1$, $R^2$ $R^3$ and $R^4$ are each independently an alkyl group or phenyl group,

$$C_6H_{6-n}(COOH)_n \quad (II)$$

wherein n is an integer of 2 to 4.

**8.** The biaxially oriented polyester film according to claim 3, wherein the phosphorus compound is at least one member selected from the group consisting of phosphoric acid, phosphorous acid, phosphonic acid and phosphonate compound.

**9.** The biaxially oriented polyester film according to claim 1, wherein the inert particles have an average particle diameter of 0.01 to 0.5 μm and are contained in an amount of 0.1 to 0.5 wt% based on the weight of the polyester constituting the film.

**10.** The biaxially oriented polyester film according to claim 1, wherein the inert particles are spherical silica particles or crosslinked organic particles.

**11.** The biaxially oriented polyester film according to claim 10, wherein the crosslinked organic particles are at least one member selected from the group consisting of silicone particles and crosslinked polystyrene particles.

**12.** The biaxially oriented polyester film according to claim 1, wherein the inert particles consist of inert particles (A) having an average particle diameter of 0.01 to 0.5 μm and inert particles (B) having an average particle diameter of 0.1 to 1.0 μm, the content of the inert particles (A) is 0.1 to 0.5 wt% and the content of the inert particles (B) is 0.001 to 0.1 wt% based on the weight of the polyester constituting the film.

**13.** The biaxially oriented polyester film according to claim 12, wherein the inert particles (A) and the inert particles (B) are each independently selected from the group consisting of spherical silica fine particles and crosslinked organic particles.

**14.** The biaxially oriented polyester film according to claim 13, wherein the crosslinked organic particles are at least one member selected from the group consisting of silicone particles and crosslinked polystyrene particles.

**15.** The biaxially oriented polyester film according to claim 1, wherein the polyester is polyethylene terephthalate.

**16.** The biaxially oriented polyester film according to claim 1, wherein the polyester is polyethylene-2,6-naphthalene dicarboxylate.

**17.** The biaxially oriented polyester film according to claim 1, wherein the thickness of the film is 20 to 80 μm.

**18.** The biaxially oriented polyester film according to claim 1, wherein the both surfaces of the film have a center line average surface roughness (Ra) of 2 to 7 nm and scratches having a length of 2 mm or more in each surface of the film are 20 or less per $m^2$.

**19.** The biaxially oriented polyester film according to claim 1, wherein the both surfaces of the film have a center line average surface roughness (Ra) of 2 to 7 nm and an incidence of scratches having a length of 0.3 to 1.0 mm in the each surface of film are 10 % or less.

**20.** A laminated biaxially oriented polyester film for flexible disks, comprising the biaxially oriented polyester film of claim 1 and an adhesive layer which comprises colloidal particles having an average particle diameter of 10 to 200 nm and a water-dispersible polyester resin having a sulfonate group and is formed on both sides of the film.

**21.** The laminated polyester film according to claim 20, wherein the relationship between the average particle diameter (nm) of the colloidal particles and the thickness (nm) of the adhesive layer satisfies the following expression (4):

$$0.2 \leqq \text{(thickness of adhesive layer/average particle diameter of colloidal particles)} \leqq 3.0. \quad (4)$$

**22.** A flexible disk comprising the biaxially oriented polyester film of claim 1 and a magnetic layer formed on both sides of the film.

**23.** A flexible disk comprising the biaxially oriented polyester film of claim 20 and a magnetic layer formed on both sides of the film.

**24.** The flexible disk according to claim 22 or 23 which has a diameter of 2 to 10 cm.

**25.** The flexible disk according to any one of claims 22 to 24 which is read by an MR head.

Fig. 1

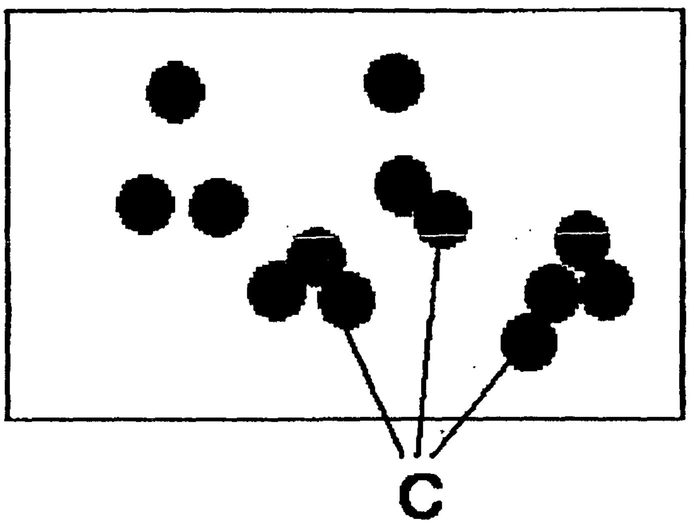

## INTERNATIONAL SEARCH REPORT

International application No.
PCT/JP03/13568

A. CLASSIFICATION OF SUBJECT MATTER
Int.Cl[7] G11B5/73, G11B5/733, C08J5/18, C08L67/00, B32B27/36, B29C55/12, B29C55/14, B29C55/16

According to International Patent Classification (IPC) or to both national classification and IPC

B. FIELDS SEARCHED
Minimum documentation searched (classification system followed by classification symbols)
Int.Cl[7] G11B5/73, G11B5/733, C08J5/18, C08L67/00, B32B27/36, B29C55/12, B29C55/14, B29C55/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-254510 A (Teijin Ltd.), 11 September, 2002 (11.09.02), Full text (Family: none) | 1-25 |
| Y | JP 2000-289105 A (Teijin Ltd.), 17 October, 2000 (17.10.00), Full text (Family: none) | 1-25 |
| Y | JP 6-80808 A (Teijin Ltd.), 22 March, 1994 (22.03.94), Full text (Family: none) | 1-19,22,24, 25 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 January, 2004 (06.01.04) | Date of mailing of the international search report<br>20 January, 2004 (20.01.04) |
| Name and mailing address of the ISA/<br>Japanese Patent Office<br>Facsimile No. | Authorized officer<br>Telephone No. |

Form PCT/ISA/210 (second sheet) (July 1998)

**INTERNATIONAL SEARCH REPORT**

International application No.
PCT/JP03/13568

C (Continuation). DOCUMENTS CONSIDERED TO BE RELEVANT

| Category* | Citation of document, with indication, where appropriate, of the relevant passages | Relevant to claim No. |
|---|---|---|
| Y | 2002-150538 A (Teijin Ltd.), 24 May, 2002 (24.05.02), Full text (Family: none) | 1-19,22,24 25 |
| Y | JP 2000-309649 A (Teijin Ltd.), 07 November, 2000 (07.11.00), Full text & WO 00/26903 A1 & EP 1047048 A1 & CN 1292135 T | 1-19,22,24 25 |
| Y | JP 2001-84563 A (Teijin Ltd.), 30 March, 2001 (30.03.01), Full text & EP 1069553 A1 | 1-19,22,24 25 |
| Y | JP 2002-264286 A (Teijin Ltd.), 18 September, 2002 (18.09.02), Full text (Family: none) | 1-19,22,24 25 |
| Y | JP 2001-344733 A (Toray Industries, Inc.), 14 December, 2001 (14.12.01), Full text (Family: none) | 1-19,22,24 25 |
| Y | JP 2001-6157 A (Teijin Ltd.), 12 January, 2001 (12.01.01), Full text & WO 00/79524 A1 & EP 1195748 A1 | 1-19,22,24 25 |
| Y | JP 10-315415 A (Teijin Ltd.), 02 December, 1998 (02.12.98), Full text (Family: none) | 1-19,22,24 25 |
| Y | JP 10-138428 A (Teijin Ltd.), 26 May, 1998 (26.05.98), Full text (Family: none) | 1-19,22,24 25 |
| Y | JP 2000-264984 A (Toray Industries, Inc.), 26 September, 2000 (26.09.00), Full text (Family: none) | 1-19,22,24 25 |
| Y | JP 2000-302892 A (Toray Industries, Inc.), 31 October, 2000 (31.10.00), Full text (Family: none) | 1 |

Form PCT/ISA/210 (continuation of second sheet) (July 1998)

**INTERNATIONAL SEARCH REPORT**

International application No.
PCT/JP03/13568

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-94877 A (Toray Industries, Inc.), 08 April, 1997 (08.04.97), Full text (Family: none) | 12 |
| Y | WO 00/21731 A (Teijin Ltd.), 20 April, 2000 (20.04.00), Full text & TW 0495431 B & EP 1060866 A1 | 20,21,23-25 |
| A | JP 6-9809 A (Teijin Ltd.), 18 January, 1994 (18.01.94), Full text (Family: none) | 1-25 |
| E | JP 2003-132524 A (Teijin Dupont Film Kabushiki Kaisha), 09 May, 2003 (09.05.03), Full text (Family: none) | 1-25 |

Form PCT/ISA/210 (continuation of second sheet) (July 1998)